# EUROPEAN PATENT APPLICATION

(11) **EP 4 625 624 A1**
(43) Date of publication of application: **01.10.2025**
(21) Application number: 23893749.4
(22) Date of filing: 17.11.2023
(51) Int. Cl.: H01M 10/6556, H01M 10/655, H01M 10/617, H01M 10/625, H01M 50/244

(54) **THERMAL MANAGEMENT COMPONENT, BATTERY, AND ELECTRICAL DEVICE**

(30) Priority: 24.11.2022 CN 202223133725 U
(71) Applicant: Contemporary Amperex Technology (Hong Kong) Limited, Hong Kong (HK)
(72) Inventor: WANG, Yalei, Ningde, Fujian 352100 (CN); MA, Yan, Ningde, Fujian 352100 (CN); QIN, Lun, Ningde, Fujian 352100 (CN); WANG, Chunhui, Ningde, Fujian 352100 (CN); JI, Jinqing, Ningde, Fujian 352100 (CN); CHEN, Liangmei, Ningde, Fujian 352100 (CN); CHAN, Libing, Ningde, Fujian 352100 (CN)
(74) Representative: Ran, Handong
(86) International application number: PCT/CN2023/132393
(87) International publication number: WO 2024/109659

(57) **Abstract**

The present application discloses a thermal management component, a battery, and an electrical device. The thermal management component comprises a bottom wall and two side walls, the two side walls are oppositely arranged on two sides of the bottom wall in a first direction, and the bottom wall and the two side walls jointly define an accommodating cavity used for accommodating a battery cell; a first flow channel is formed in the bottom wall, second flow channels are respectively formed in the two side walls, and the first flow channel and the second flow channels are used for containing a heat exchange medium so as to adjust the temperature of the battery cell, wherein transition parts are arranged at bending positions of the bottom wall and the two side walls, a communication flow channel is formed in each transition part, and the first flow channel is communicated with the second flow channels through the communication flow channels. The technical solution provided by the present application can improve the reliability of batteries.

## Description

### CROSS-REFERENCE TO RELATED APPLICATIONS

This application claims priority to Chinese Patent Application No.202223133725.7 filed on November 24, 2022 and entitled "THERMAL MANAGEMENT COMPONENT, BATTERY, AND ELECTRIC DEVICE", which is incorporated herein by reference in its entirety.

### TECHNICAL FIELD

This application relates to the field of battery technologies, and in particular, to a thermal management component, a battery, and an electric device.

### BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

With the development of battery technologies, how to improve the reliability of batteries is an urgent technical problem to be solved in the battery technologies.

### SUMMARY

This application provides a thermal management component, a battery, and an electric device. The technical solution provided in this application can improve the reliability of batteries.

This application is implemented using the following technical solution.

According to a first aspect, this application provides a thermal management component, including a bottom wall and two side walls, where the two side walls are arranged opposite each other on two sides of the bottom wall along a first direction, and the bottom wall and the two side walls jointly enclose an accommodating cavity for accommodating a battery cell; and a first flow channel is formed inside the bottom wall, a second flow channel is formed inside both the two side walls, and the first flow channel and the second flow channel are used for accommodating a heat exchange medium for adjusting a temperature of the battery cell;
where, a transition part is provided at bends of the bottom wall and the two side walls, a communicating flow channel is formed inside the transition part, and the communicating flow channel communicates the first flow channel and the second flow channel.

In this solution, the first flow channel is provided in the bottom wall of the thermal management component, the second flow channel is provided in the two side walls of the thermal management component, and the first flow channel and the second flow channel communicate through the communicating flow channel. In this way, the heat exchange medium can be used to act on both the bottom surface and side surfaces of the battery cell. This effectively enhances the capability of the thermal management component in adjusting the temperature of the battery cell and reduces the temperature difference between the bottom and top of the battery cell, thereby effectively controlling the risk of thermal runaway and improving the reliability of the battery.

According to some embodiments provided in this application, the transition part forms a concave portion on an inner side of the thermal management component, and the transition part forms a convex portion on an outer side of the thermal management component.

In this solution, the concave portion is formed by the transition part on the inner side of the thermal management component and the convex portion is formed on the outer side of the thermal management component. This can reduce the flow resistance (flow resistance of the heat exchange medium) so that the heat exchange medium can smoothly flow upward from the first flow channel to the second flow channel. In addition, this can also solve the problem that a flow channel is difficult to be formed around a corner, reducing the risk of creasing, cracking, or collapse at the bends of the side walls and bottom wall caused by the side walls bending on the bottom wall due to the stamping process or bending process.

According to some embodiments provided in this application, a height of the communicating flow channel is h1 and 1.0 mm ≤ h1 ≤ 3.0 mm is satisfied.

In this solution, the height of the communicating flow channel is affected by the process of forming a flow channel around a corner, as well as water resistance. If h1 < 1.0 mm, the heat exchange medium flowing from the first flow channel to the second flow channel is affected and the flow resistance is excessively large, which affects the heat exchange efficiency of the thermal management component. If h1 > 3.0 mm, the deformation of a material at the bends of the bottom wall and side walls is excessively large and exceeds the stress intensity limit of the material, resulting in creasing, cracking, or collapse of the material at such bends. Therefore, in some embodiments of this application, the height h1 of the communicating flow channel is restricted as 1.0 mm ≤ h1 ≤ 3.0 mm, so that the transition parts at the bends of the bottom wall and side walls all satisfy the requirements for manufacturability and flow resistance.

According to some embodiments provided in this application, the thermal management component includes a first base plate and a second base plate, where the first base plate includes a first bottom plate and two first side plates, and the two first side plates are arranged opposite each other on two sides of the first bottom plate; and the second base plate includes a second bottom plate and two second side plates, and the two second side plates are arranged opposite each other on two sides of the second bottom plate; where the first bottom plate and the second bottom plate are stacked to form the bottom wall, and the first flow channel is formed between the first bottom plate and the second bottom plate; and the first side plate and the second side plate are stacked to form the side wall, and the second flow channel is formed between the first side plate and the second side plate.

In this solution, the thermal management component is simple in structure and easy to manufacture.

According to some embodiments provided in this application, a first groove is formed on a surface of the second bottom plate facing the first bottom plate, and the first bottom plate covers the first groove to form the first flow channel; and a second groove is formed on a surface of the second side plate facing the first side plate, and the first side plate covers the second groove to form the second flow channel.

In this solution, the first flow channel and the second flow channel can be formed easily, and the first groove and the second groove are formed on the second bottom plate and the second side plate of the second base plate respectively, so as to cooperate with the first base plate to form the first flow channel and the second flow channel for circulating the heat exchange medium. In this way, the temperature of the battery cell is effectively adjusted, improving the reliability of the battery.

According to some embodiments of this application, a thickness of the first base plate is M1, a thickness of the second base plate is M2, and M1 + M2 ≤ 3 mm is satisfied.

In this solution, the thickness of the first base plate and the second base plate affects the weight energy density of a battery, as well as the molding difficulty of the thermal management component. Greater thickness for the first base plate and second base plate results in a higher weight, reducing the energy density of the battery. Greater thickness for the first base plate and second base plate results in greater strength for the first base plate and second base plate, increasing the molding difficulty of the thermal management component. Therefore, in some embodiments of this application, the thickness M1 of the first base plate and the thickness M2 of the second base plate are restricted as M1 + M2 ≤ 3 mm, so as to meet the manufacturability requirements for the thermal management component and weight energy density requirements for the battery.

According to some embodiments of this application, a thickness of the first base plate is M1, a thickness of the second base plate is M2, and 0.3 ≤ M2/(M1 + M2) ≤ 0.5 is satisfied.

In this solution, the thickness of the second base plate is related to the strength of the second base plate. Greater thickness for the second base plate results in greater strength for the second base plate, increasing the difficulty of forming the first groove and the second groove on the second base plate. Likewise, greater thickness for the first base plate results in greater strength and higher structural stability for the second base plate but a higher weight, affecting the weight energy density of the battery. Therefore, in some embodiments of this application, the thickness M1 of the first base plate and the thickness M2 of the second base plate are restricted as 0.3 ≤ M2/(M1 + M2) ≤ 0.5. This reduces the molding difficulty of the first groove and the second groove, improves the structural stability of the thermal management component, and increases the weight energy density of the battery having such thermal management component.

According to some embodiments of this application, the second base plate is provided on a side of the first base plate back away from the accommodating cavity.

In this solution, the second base plate is provided on the side back away from the accommodating cavity, so that the flat surface of the first base plate faces the battery cell to reliably support the battery cell.

According to some embodiments of this application, the transition part includes a first transition subpart provided at bends of the first bottom plate and the first side plate and a second transition subpart provided at bends of the second bottom plate and the second side plate, and the communicating flow channel is formed between the first transition subpart and the second transition subpart; where the first transition subpart forms the concave portion on the inner side of the thermal management component, and the second transition subpart forms the convex portion on the outer side of the thermal management component.

In this solution, the first transition subpart is provided at bends of the first bottom plate and the first side plate and a second transition subpart is provided at bends of the second bottom plate and the second side plate, so as to form a bulge-like transition part. In this way, the communicating flow channel is effectively formed and the heat exchange medium effectively flows between the first flow channel and the second flow channel.

According to some embodiments of this application, the first transition subpart includes a first connecting segment and a second connecting segment, one end of the second connecting segment is connected to the first side plate through the first connecting segment, and another end of the second connecting segment is connected to the first bottom plate, where the first connecting segment is a first arc transition segment, an inner radius of the first connecting segment is R, and R ≥ 8 mm is satisfied.

In this solution, the first transition subpart can be formed using the stamping process. The inner radius R of the first connecting segment affects the height h1 of the communicating flow channel. When the inner radius R is larger, the height h1 of the communicating flow channel is greater. According to tests, when the inner radius R is greater than or equal to 8 mm, the height h1 of the communicating flow channel can be greater than or equal to 1.0 mm, thereby satisfying the flow resistance requirement and enabling the heat exchange medium to effectively flow between the first flow channel and the second flow channel.

According to some embodiments of this application, the first bottom plate and the first side plate are connected through a third transition subpart at a position without the first transition subpart, the third transition subpart includes a third connecting segment and a fourth connecting segment, one end of the fourth connecting segment is connected to the first side plate through the third connecting segment, and another end of the fourth connecting segment is connected to the first bottom plate, where the third connecting segment is a second arc transition segment and an inner radius of the second arc transition segment is r; where the third transition subpart protrudes from the first bottom plate in a direction approaching the second bottom plate, the third transition subpart protrudes from the first bottom plate by a depth of H1, and r < H1 is satisfied.

In this solution, the first side plate is bent on the first bottom plate by using the stamping or bending process, the first bottom plate and the first side plate are connected through the third transition subpart at a position without the first transition subpart, and the third connecting segment of the third transition subpart is in the shape of an arc with the inner radius of r. The third transition subpart is set to protrude in a direction approaching the second bottom plate, the protruding depth H1 corresponds to the sinking depth of the third connecting segment, and H1 is greater than r. This prevents battery cell assembly from being intervened at the bends between the first bottom plate and the first side plate, ensuring smooth assembly of the battery cell.

According to some embodiments of this application, r = 3 mm and 3 mm < H1 ≤ 10 mm are satisfied.

In this solution, in some embodiments, the inner radius r of the third connecting segment is 3 mm. When H1 is less than or equal to 3 mm, it means that the sinking depth of the third connecting segment is less than or equal to 3 mm. In this case, the highest position of the third connecting segment is level with the first bottom plate. During battery cell assembly, the side wall of the battery cell is in contact with the first side plate, failing to satisfy the assembly requirement that a clearance is needed between the battery cell of the battery and the first side plate. When H1 is greater than 10 mm, the height of the thermal management component is excessively great, reducing space in the height direction of the battery and affecting the volumetric energy density of the battery. Therefore, H1 is restricted as 3 mm < H1 ≤ 10 mm in this application. This not only leaves a clearance between the battery cell and the first side plate for satisfying the assembly requirements but also avoids an excessive height for the thermal management component and increases the volumetric energy density of the battery.

According to some embodiments of this application, along a second direction, a size of the second transition subpart is L1 and L1 ≥ 70 mm is satisfied; and the first direction, the second direction, and a thickness direction of the bottom wall are perpendicular to each other.

In this solution, the transition part can be made using the hot rolling process. In the second direction, the second transition subpart can be sequentially divided into a first rolling segment, a fluid segment, and a second rolling segment which are connected with each other. The first rolling segment and the second rolling segment are respectively used to connect the fluid segment to the bottom wall or side wall. The fluid segment is part of the communicating flow channel for effectively circulating the heat exchange medium. A size of the fluid segment should be greater than or equal to 20 mm in the second direction. If the size is less than 20 mm, problems of high molding risk and poor manufacturability are caused. Limited by the hot rolling process and considering a deviation in the rolling direction, sizes of the first rolling segment and the second rolling segment should be greater than or equal to 25 mm in the second direction. In the second direction, the size L1 of the second transition subpart is the sum of the first rolling segment, the fluid segment, and the second rolling segment, and the size L1 should be greater than or equal to 25 mm + 20 mm + 25 mm, namely, L1 ≥ 70 mm, so as to improve the manufacturability of the transition part.

According to some embodiments of this application, along the first direction, a size of the second transition subpart is W and W ≥ 22 mm is satisfied.

In this solution, in the first direction, to improve the molding feasibility of the second transition subpart, the second transition subpart may include a rounded corner at the bend on the border of the side wall, a planar area, a transition area between the plane and an inclined plane, the inclined plane, and a transition area between the inclined plane and the bottom wall. Therefore, the size W of the second transition subpart is the sum of a size of the rounded corner at the bend, a size of the planar area, a size of the transition area between the plane and inclined plane, a size of the inclined plane, and a size of the transition area between the inclined plane and bottom surface. These sizes are affected by the manufacturability of parts. To improve the manufacturability, these sizes should be greater than or equal to 8 mm, 2 mm, 2 mm, 8 mm, and 2 mm respectively. As a result, W ≥ 22 mm.

According to some embodiments of this application, a height of the first flow channel is h2, and 1.0 mm ≤ h2 ≤ 4.0 mm is satisfied.

In this solution, an excessively small height for the first flow channel may cause an excessively great flow resistance, affecting the thermal management effects of the thermal management component on the battery cell. An excessively great height for the second flow channel may reduce the volumetric energy density of the battery and increase the molding difficulty. Therefore, in some embodiments of this application, h2 of the first flow channel is restricted as 1.0 mm ≤ h2 ≤ 4.0 mm. This not only improves the fluidity of the heat exchange medium and the thermal management effects on the battery cell, but also increases the volumetric energy density of the battery.

According to some embodiments of this application, a reinforcing part is provided on an outer side of the thermal management component, and the reinforcing part connects the transition part and the bottom wall.

In this solution, the reinforcing part is provided to increase the rigidity of the transition part and reduce the cracking risk of the transition part.

According to some embodiments of this application, the reinforcing part is a welded part.

In this solution, the welded part is provided to restrain the transition part, so as to increase the rigidity of the transition part and reduce the cracking risk of the transition part.

According to some embodiments of this application, the bottom wall is provided with a first access pipe and a second access pipe, and the first access pipe and the second access pipe communicate with the first flow channel.

In this solution, the first access pipe and the second access pipe are provided to allow the heat exchange medium to flow into and out of the thermal management component, so as to circulate the heat exchange medium.

According to some embodiments of this application, the first flow channel includes a first flow sub-channel, a second flow sub-channel, and a third flow sub-channel, where the first flow sub-channel and the second flow sub-channel are arranged side by side, the first access pipe communicates with one end of the first flow sub-channel, the second access pipe communicates with one end of the second flow sub-channel, and another end of the first flow sub-channel and another end of the second flow sub-channel communicate through the third flow sub-channel; the two side walls are a first side wall and a second side wall; four transition parts are provided: a first transition part and a second transition part provided at bends of the first side wall and the bottom wall, and a third transition part and a fourth transition part provided at bends of the second side wall and the bottom wall; one end of the second flow channel in the first side wall communicates with the first flow sub-channel through the first transition part, and another end communicates with the third flow sub-channel through the second transition part; and one end of the second flow channel in the second side wall communicates with the second flow sub-channel through the third transition part, and another end communicates with the third flow sub-channel through the fourth transition part.

In this solution, the first flow sub-channel, the second flow sub-channel, the third flow sub-channel, and the four transition parts are provided, so that the heat exchange medium enters the first flow channel through the first access pipe or the second access pipe, passes through two second flow channels, and then enters the second access pipe or the first access pipe. This improves the heat exchange efficiency on the battery cell and the reliability of the battery.

According to some embodiments of this application, the thermal management component further includes a bottom support plate, and the bottom support plate is connected to a surface of the second bottom plate back away from the first bottom plate.

In this solution, the bottom support plate is provided to increase the overall strength and rigidity of the thermal management component, thereby improving the reliability of the thermal management component.

According to some embodiments of this application, a third groove is formed on a surface of the bottom support plate facing the second bottom plate, and the third groove accommodates the transition part.

In this solution, the third groove is provided to accommodate the transition part, so as to protect the transition part from being cracked under external force.

According to some embodiments of this application, a protrusion corresponding to a position of the first groove is provided on a surface of the second bottom plate back away from the first bottom plate; and a fourth groove is formed on the surface of the bottom support plate facing the second bottom plate, and the fourth groove accommodates the protrusion.

In this solution, the fourth groove is provided to accommodate the protrusion formed on the outer surface of the second bottom plate, so as to protect the first flow channel and allow the thermal management component to have a flat bottom surface.

According to a second aspect, this application provides a battery including a battery cell and the thermal management component according to the first aspect, where the battery cell is provided in the accommodating cavity.

According to some embodiments of this application, the thermal management component is a box for the battery.

According to a third aspect, this application provides an electric device, including the battery according to the second aspect and configured to provide electric energy.

Additional aspects and advantages of this application will be described below in part, and some will be explicit in the following description or may be learned by practicing this application.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded stereogram of a battery according to some embodiments of this application;
FIG. 3 is a stereogram of a thermal management component according to some embodiments of this application;
FIG. 4 is a schematic diagram of a thermal management component according to some embodiments of this application;
FIG. 5 is a sectional view of FIG. 4 in the A-A direction;
FIG. 6 is an enlarged view of position A in FIG. 5;
FIG. 7 is an enlarged view of position B in FIG. 5;
FIG. 8 is a partial schematic diagram of a first base plate according to some embodiments of this application;
FIG. 9 is a schematic diagram of a second transition subpart according to some embodiments of this application;
FIG. 10 is a schematic diagram of a second transition subpart according to some embodiments of this application;
FIG. 11 is a schematic diagram of a thermal management component according to some embodiments of this application;
FIG. 12 is a stereogram of a thermal management component according to some other embodiments of this application.

Reference signs: 10: thermal management component; 11: bottom wall; 110: first flow channel; 12: side wall; 120: second flow channel; 13: transition part; 13A: communicating flow channel; 130: concave portion; 131: convex portion; 132: first transition subpart; 133: second transition subpart; 1320: first connecting segment; 1321: second connecting segment; 134: third transition subpart; 1340: third connecting segment; 1341: fourth connecting segment; 14: reinforcing part; 15: first access pipe; 16: second access pipe; 110a: first flow sub-channel; 110b: second flow sub-channel; 110c: third flow sub-channel; 12a: first side wall; 12b: second side wall; 13a: first transition part; 13b: second transition part; 13c: third transition part; 13d: fourth transition part; 17: bottom support plate; 170: third groove; 171: fourth groove; 100: first base plate; 1000: first bottom plate; 1001: first side plate; 101: second base plate; 1010: second bottom plate; 1011: second side plate; 10100: first groove; 10101: protrusion; x: first direction; y: second direction; z: thickness direction of bottom wall; 1000A: vehicle; 200: controller; 300: motor; 10A: battery; and 30: battery cell.

### DESCRIPTION OF EMBODIMENTS

The following describes in detail the embodiments of technical solutions of this application with reference to the accompanying drawings. The following embodiments are merely intended for a clearer description of the technical solutions of this application and therefore are just used as examples which do not constitute any limitations on the protection scope of this application.

Unless otherwise defined, all technical and scientific terms used herein shall have the same meanings as commonly understood by those skilled in the art to which this application belongs. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of some embodiments of this application, "multiple" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment, or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of A, presence of both A and B, and presence of B. In addition, a character "/" in this specification generally indicates an "or" relationship between contextually associated objects.

In the description of some embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of some embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as appropriate to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cuboid or in other shapes, which is not limited in the embodiments of this application either. The battery mentioned in the embodiments of this application is a single physical module that includes one or more battery cells for providing a higher voltage and capacity.

The development of battery technologies should consider many design factors, for example, performance parameters such as energy density, cycle life, discharge capacity, and charge and discharge rate. In addition, reliability of batteries also needs to be considered. For example, thermal runaway of a battery will cause the battery to combust or explode, greatly affecting the reliability of the battery. Thermal runaway is caused when the heat generation rate of a battery cell is far higher than the heat dissipation rate and a large amount of heat accumulated is not released in time.

To improve the reliability of a battery, the battery generally includes a thermal management component, and the thermal management component contains a heat exchange medium for adjusting the temperature of the battery cell, so that the battery is in an appropriate temperature range and has high reliability. The heat exchange medium herein may be fluid (liquid) or gas. To adjust the temperature means to heat or cool a plurality of battery cells. Optionally, the fluid may be circulated, so as to achieve better temperature adjustment effects.

However, the inventors have found that existing batteries with a thermal management component still have high risks of thermal runaway, and the battery reliability is low. Through research, the inventors have found that the existing thermal management components are all plate-shaped and arranged below a battery cell to exchange heat only with the bottom of the battery cell. In this case, a large temperature difference exists between the bottom and top of the battery cell, resulting in low heat exchange efficiency, high thermal runaway risks, and low reliability of the battery.

To improve the heat exchange efficiency of the thermal management component and improve the reliability of the battery, the inventors have designed, through in-depth research, a thermal management component. The thermal management component includes a bottom wall and two side walls, and the bottom wall and the two side walls jointly enclose an accommodating cavity to accommodate the battery cell. A first flow channel is formed inside the bottom wall, a second flow channel is formed inside the side wall, a transition part is provided at bends of the bottom wall and the side wall, a communicating flow channel is formed inside the transition part, and the first flow channel and the second flow channel communicate through the communicating flow channel.

In this solution, the heat exchange medium can flow among the first flow channel, the communicating flow channel, and the second flow channel, so as to perform heat exchange on the battery cell in the accommodating cavity in different directions. This increases the heat exchange area of the battery cell, reduces the temperature difference between the top and bottom of the battery cell, and improves the heat exchange efficiency on the battery cell, thereby improving the reliability of the battery.

The technical solution described in the embodiments of this application is applicable to a battery and an electric device using the battery.

The electric device may be a vehicle, a mobile phone, a portable device, a notebook computer, a ship, a spacecraft, an electric toy, an electric tool, or the like. The vehicle may be a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, an example in which the electric device is a vehicle 1000A is used for description in the following embodiments.

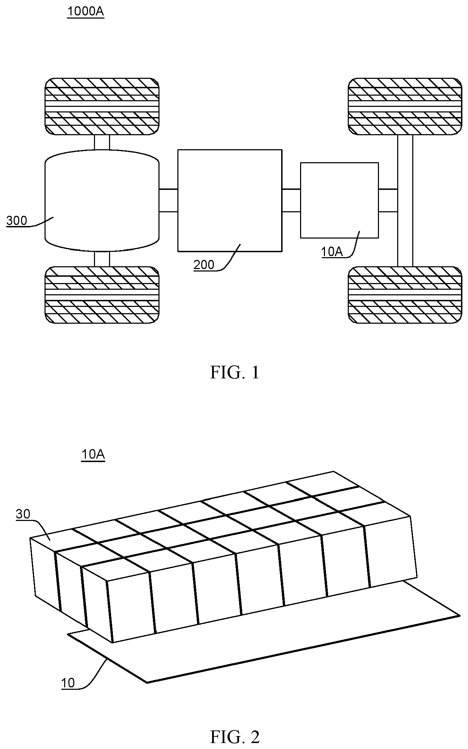

FIG. 1 is a schematic structural diagram of a vehicle 1000A according to some embodiments of this application.

A controller 200, a motor 300, and a battery 10A can be provided inside the vehicle 1000A, where the controller 200 is configured to control the battery 10A to supply power to the motor 300. For example, a battery 10A may be provided at the bottom, front, or rear of the vehicle 1000A. The battery 10A may be configured to supply power to the vehicle 1000A. For example, the battery 10A may be used as an operational power supply for the vehicle 1000A, and may be applied to a circuit system of the vehicle 1000A, for example, may be configured to supply power to meet the start, navigation, and driving requirements of the vehicle 1000A. In another embodiment of this application, the battery 10A can be used not only as the operational power supply for the vehicle 1000A but also as a driving power supply for the vehicle 1000A, to totally or partially replace the fossil fuel or natural gas to provide driving power for the vehicle 1000A.

Refer to FIG. 2. FIG. 2 is an exploded stereogram of a battery 10A according to some embodiments of this application.

The battery 10A includes a battery cell 30 and a thermal management component 10. In the battery 10A, the battery cell 30 may be provided in plurality, and the plurality of battery cells 30 may be connected in series, parallel, or series-parallel, where a series-parallel connection refers to a combination of series and parallel connections among the plurality of battery cells 30. The plurality of battery cells 30 may be directly connected in series, parallel, or series-parallel. Alternatively, the battery 10A may be obtained by connecting a plurality of battery modules in series, parallel, or series-parallel, where each of the battery modules is formed by connecting a plurality of battery cells 30 in series, parallel, or series-parallel. The battery 10A may further include another structure. For example, the battery 10A may further include a busbar for implementing an electrical connection between the plurality of battery cells 30.

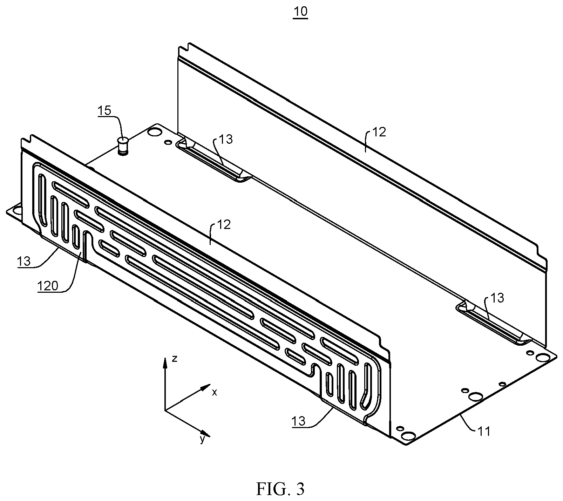

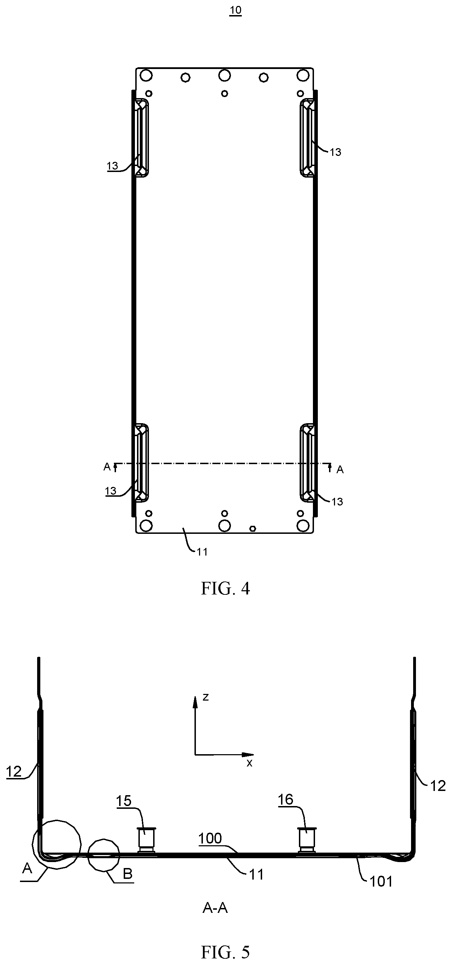

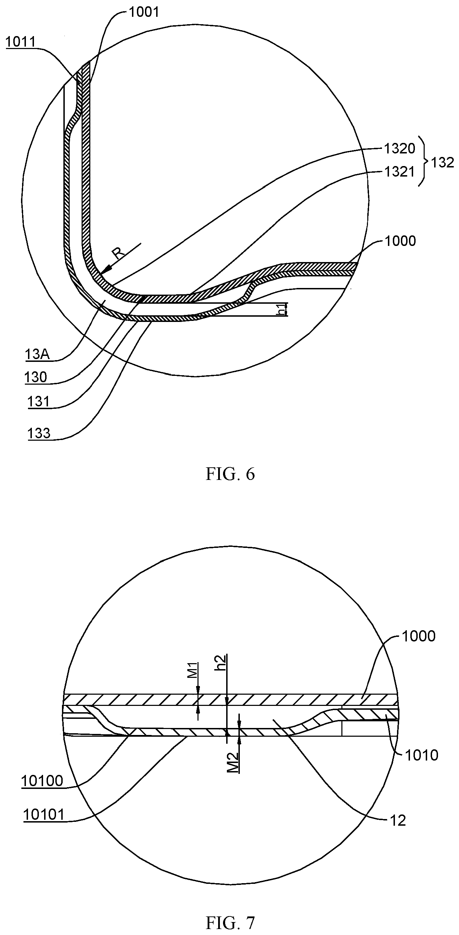

According to some embodiments of this application, with reference to FIG. 3 to FIG. 6, FIG. 3 is a stereogram of a thermal management component 10 according to some other embodiments of this application, FIG. 4 is a schematic diagram of a thermal management component 10 according to some embodiments of this application, FIG. 5 is a sectional view of FIG. 4 in the A-A direction, and FIG. 6 is an enlarged view of position A in FIG. 5.

The thermal management component 10 includes a bottom wall 11 and two side walls 12. The two side walls 12 are arranged opposite each other on two sides of the bottom wall 11 along a first direction x, and the bottom wall 11 and the two side walls 12 jointly enclose an accommodating cavity for accommodating a battery cell. A first flow channel 110 is formed inside the bottom wall 11, and a second flow channel 120 is formed inside both the two side walls 12 (the position of the second flow channel is indicated by sign 120 in FIG. 3). The first flow channel 110 and the second flow channel 120 are used for accommodating a heat exchange medium for adjusting a temperature of the battery cells. A transition part 13 is provided at bends of the bottom wall 11 and the two side walls 12, a communicating flow channel 13A is formed inside the transition part 13, and the communicating flow channel 13A communicates the first flow channel 110 and the second flow channel 120.

Located between the two side walls 12, the bottom wall 11 is a part that can support the battery cell. The first flow channel 110 is formed inside the bottom wall 11, and the first flow channel 110 can accommodate and allow the heat exchange medium to flow to act on a bottom surface of the battery cell to adjust the temperature of the battery cell. The first direction x is perpendicular to a thickness direction z of the bottom wall. In some embodiments, the first direction x may be a width direction of the bottom wall 11, and the two side walls 12 are arranged opposite each other on two sides of the bottom wall 11 in the width direction. When a battery cell is put into the accommodating cavity, the side walls 12 may correspond to side surfaces of the battery cell. The second flow channel 120 is formed inside the side wall 12, and the second flow channel 120 can accommodate and allow the heat exchange medium to flow to act on a side surface of the battery cell to adjust the temperature of the battery cell.

The transition part 13 is a part provided at bends of the bottom wall 11 and the side wall 12, and a communicating flow channel 13A is formed inside the transition part 13. The communicating flow channel 13A communicates the first flow channel 110 and the second flow channel 120, so that the heat exchange medium can flow between the first flow channel 110 and the second flow channel 120 and then acts on the bottom surface and side surfaces of the battery cell, effectively reducing the temperature difference between the bottom and top of the battery cell.

In this solution, the first flow channel 110 is provided on the bottom wall 11 of the thermal management component 10, the second flow channel 120 is provided on the two side walls 12 of the thermal management component 10, and the first flow channel 110 and the second flow channel 120 communicate through the communicating flow channel 13A. In this way, the heat exchange medium can be used to act on both the bottom surface and side surfaces of the battery cell. This effectively enhances the capability of the thermal management component 10 in adjusting the temperature of the battery cell and reduces the temperature difference between the bottom and top of the battery cell, thereby effectively controlling the risk of thermal runaway and improving the reliability of the battery.

According to some embodiments provided in this application, as shown in FIG. 6, the transition part 13 forms a concave portion 130 on an inner side of the thermal management component 10, and the transition part 13 forms a convex portion 131 on an outer side of the thermal management component 10.

The concave portion 130 may refer to a depressed portion of the transition part 13 on the inner side of the thermal management component 10 compared to the bottom wall 11 on the inner side of the thermal management component 10. The convex portion 131 may refer to a protrusion of the transition part 13 on the outer side of the thermal management component 10 compared to the bottom wall 11 on the outer side of the thermal management component.

In this solution, the concave portion 130 is formed by the transition part 13 on the inner side of the thermal management component 10 and the convex portion 131 is formed on the outer side of the thermal management component 10. This can reduce the flow resistance (flow resistance of the heat exchange medium) so that the heat exchange medium can smoothly flow upward from the first flow channel 110 to the second flow channel 120. In addition, this can also solve the problem that a flow channel is difficult to be formed around a corner, reducing the risk of creasing, cracking, or collapse at the bends of the side walls 12 and bottom wall 11 caused by the side walls 12 bending on the bottom wall 11 due to the stamping process or bending process.

In some other embodiments, a portion of the transition part 13 on the inner side of the thermal management component 10 may be level with a portion of the bottom wall 11 on the inner side of the thermal management component 10.

According to some embodiments provided in this application, referring to FIG. 6, a height of the communicating flow channel 13A is h1 and 1.0 mm ≤ h1 ≤ 3.0 mm is satisfied.

The height of the communicating flow channel 13A may refer to a size of the communicating flow channel 13A in a direction perpendicular to the flow direction of the heat exchange medium. In some embodiments, as shown in FIG. 6, the communicating flow channel 13A is formed by two opposite sides, and the height of the communicating flow channel 13A may also refer to a distance between the two sides.

In some embodiments, a value of h1 may be any value among 1.0 mm, 1.1 mm, 1.2 mm, 1.3 mm, ..., 2.7 mm, 2.8 mm, 2.9 mm, or 3.0 mm.

In this solution, the height of the communicating flow channel 13A is affected by the process of forming a flow channel around a corner and water resistance. If h1 < 1.0 mm, the heat exchange medium flowing from the first flow channel 110 to the second flow channel 120 is affected and the flow resistance is excessively large, which affects the heat exchange efficiency of the thermal management component 10. If h1 > 3.0 mm, the deformation of a material at the bends of the bottom wall 11 and side walls 12 is excessively large and exceeds the stress intensity limit of the material, resulting in creasing, cracking, or collapse of the material at such bends. Therefore, in some embodiments of this application, the height h1 of the communicating flow channel 13A is restricted as 1.0 mm ≤ h1 ≤ 3.0 mm, so that the transition parts 13 at the bends of the bottom wall 11 and side walls 12 all satisfy the requirements for manufacturability and flow resistance.

According to some embodiments provided in this application, referring to FIG. 5 and FIG. 6, the thermal management component 10 includes a first base plate 100 and a second base plate 101, where the first base plate 100 includes a first bottom plate 1000 and two first side plates 1001, and the two first side plates 1001 are arranged opposite each other on two sides of the first bottom plate 1000; and the second base plate 101 includes a second bottom plate 1010 and two second side plates 1011, and the two second side plates 1011 are arranged opposite each other on two sides of the second bottom plate 1010. The first bottom plate 1000 and the second bottom plate 1010 are stacked to form the bottom wall 11, and the first flow channel 110 is formed between the first bottom plate 1000 and the second bottom plate 1010. The first side plate 1001 and the second side plate 1011 are stacked to form the side wall 12, and the second flow channel 120 is formed between the first side plate 1001 and the second side plate 1011.

In some embodiments, the first base plate 100 and the second base plate 101 may be made of aluminum, aluminum alloy, copper, or the like. The thermal management component 10 may be formed by bending and inflating the first base plate 100 and the second base plate 101.

The first bottom plate 1000 and the first side plate 1001 may be formed on the first base plate 100 by using a stamping or bending process. The second bottom plate 1010 and the second side plate 1011 may be formed on the second base plate 101 by using a stamping or bending process. The first flow channel 110, the second flow channel 120, and the communicating flow channel 13A may be formed using an inflation process, where the inflation method used in the inflation process may include water pressure or air pressure.

In some embodiments, the parts of the first base plate 100 and the second base plate 101 for which the first flow channel 110, the second flow channel 120, or the communicating flow channel 13A are not formed may be connected through welding or bonding, or by other connection means.

In this solution, the thermal management component 10 is simple in structure and easy to manufacture.

According to some embodiments provided in this application, referring to FIG. 3 and FIG. 7, FIG. 7 is an enlarged view of position B in FIG. 5. A first groove 10100 is formed on a surface of the second bottom plate 1010 facing the first bottom plate 1000, and the first bottom plate 1000 covers the first groove 10100 to form the first flow channel 110; and a second groove is formed on a surface of the second side plate 1011 facing the first side plate 1001, and the first side plate 1001 covers the second groove to form the second flow channel 120.

The first groove 10100 may refer to a depressed part in the surface of the second bottom plate 1010 facing the first bottom plate 1000. When the first bottom plate 1000 and the second bottom plate 1010 are stacked, the surface of the first bottom plate 1000 facing the second bottom plate 1010 covers the first groove 10100 to form the first flow channel 110 capable of accommodating the heat exchange medium.

The second groove may refer to a depressed part in the surface of the second side plate 1011 facing the first side plate 1001. When the first side plate 1001 and the second side plate 1011 are stacked, the surface of the first side plate 1001 facing the second side plate 1011 covers the second groove to form the second flow channel 120 capable of accommodating the heat exchange medium.

In this solution, the first flow channel 110 and the second flow channel 120 can be formed easily, and the first groove 10100 and the second groove are formed on the second bottom plate 1010 and the second side plate 1011 of the second base plate 101 respectively, so as to cooperate with the first base plate 100 to form the first flow channel 110 and the second flow channel 120 for circulating the heat exchange medium. In this way, the temperature of the battery cell is effectively adjusted, improving the reliability of the battery.

In some other embodiments, the first groove 10100 may also be formed on the surface of the first bottom plate 1000 facing the second bottom plate 1010. The first groove 10100 of the first bottom plate 1000 and the first groove 10100 of the second bottom plate 1010 match each other and jointly form the first flow channel 110. The second groove may also be formed on the surface of the first side plate 1001 facing the second side plate 1011. The second groove of the first side plate 1001 and the second groove of the second side plate 1011 match each other and jointly form the second flow channel 120.

According to some embodiments of this application, as shown in FIG. 7, a thickness of the first base plate 100 is M1, a thickness of the second base plate 101 is M2, and M1 + M2 ≤ 3 mm is satisfied.

In some embodiments, the first base plate 100 and the second base plate 101 may be made of aluminum, aluminum alloy, steel, copper, or the like. Greater thickness for the first base plate 100 results in greater strength and higher weight. Greater thickness for the second base plate 101 results in greater strength and higher weight. Greater strength makes processing more difficult, and higher weight leads to a lower weight energy density of the battery. In some embodiments of this application, a value of M1 + M2 may be 0.5 mm, 1 mm, 1.5 mm, 2 mm, 2.5 mm, or 3 mm. In other words, the value of M1 + M2 may be 3 mm and any value less than 3 mm.

In this solution, the thickness of the first base plate 100 and the second base plate 101 affects the weight energy density of a battery, as well as the molding difficulty of the thermal management component 10. Greater thickness for the first base plate 100 and second base plate 101 results in a higher weight, reducing the energy density of the battery. Greater thickness for the first base plate 100 and second base plate 101 results in greater strength for the first base plate 100 and second base plate 101, increasing the molding difficulty of the thermal management component 10. Therefore, in some embodiments of this application, the thickness M1 of the first base plate 100 and the thickness M2 of the second base plate 101 are restricted as M1 + M2 ≤ 3 mm, so as to meet the manufacturability requirements for the thermal management component 10 and weight energy density requirements for the battery.

According to some embodiments of this application, a thickness of the first base plate 100 is M1, a thickness of the second base plate 101 is M2, and 0.3 ≤ M2/(M1 + M2) ≤ 0.5 is satisfied.

M2/(M1 + M2) ≤ 0.5 may mean that the thickness of the second base plate 101 is not greater than that of the first base plate 100. During processing of the first base plate 100 and the second base plate 101, processing difficulty of the second base plate 101 is not greater than that of the first base plate 100.

0.3 ≤ M2/(M1 + M2) may mean that the second base plate 101 has certain thickness, so as to improve the structural strength and rigidity of the second base plate 101.

In some embodiments, a value of M2/(M1 + M2) may be 0.3, 0.35, 0.4, 0.45, or 5, or the value of M2/(M1 + M2) may be any value between 0.3 and 0.5.

In this solution, the thickness of the second base plate 101 is related to the strength of the second base plate 101. Greater thickness for the second base plate 101 results in greater strength for the second base plate 101, increasing the difficulty of forming the first groove 10100 and the second groove on the second base plate 101. Likewise, greater thickness for the first base plate 100 results in greater strength and higher structural stability for the second base plate 101 but a higher weight, affecting the weight energy density of the battery. Therefore, in some embodiments of this application, the thickness M1 of the first base plate 100 and the thickness M2 of the second base plate 101 are restricted as 0.3 ≤ M2/(M1 + M2) ≤ 0.5. This reduces the molding difficulty of the first groove 10100 and the second groove, improves the structural stability of the thermal management component 10, and increases the weight energy density of the battery having such thermal management component 10.

According to some embodiments of this application, the second base plate 101 is provided on a side of the first base plate 100 back away from the accommodating cavity.

As shown in FIG. 6 and FIG. 7, the second base plate 101 is located on an outer side of the accommodating cavity compared to the first base plate 100, and the first base plate 100 is a part for supporting the battery cell.

In this solution, the second base plate 101 is provided on the side back away from the accommodating cavity, so that the flat surface of the first base plate 100 faces the battery cell to reliably support the battery cell.

According to some embodiments of this application, referring to FIG. 6, the transition part 13 includes a first transition subpart 132 provided at bends of the first bottom plate 1000 and the first side plate 1001 and a second transition subpart 133 provided at bends of the second bottom plate 1010 and the second side plate 1011, and the communicating flow channel 13A is formed between the first transition subpart 132 and the second transition subpart 133. The first transition subpart 132 forms a concave portion 130 on an inner side of the thermal management component 10, and the second transition subpart 133 forms a convex portion 131 on an outer side of the thermal management component 10.

The first transition subpart 132 may be a part formed on the first base plate 100 and located at bends of the first bottom plate 1000 and the first side plate 1001. The first transition subpart 132 is depressed from the first bottom plate 1000 towards the second bottom plate 1010 to form the concave portion 130. The second transition subpart 133 may be a part formed on the second base plate 101 and located at bends of the second bottom plate 1010 and the second side plate 1011. The second transition subpart 133 protrudes from the second bottom plate 1010 towards a direction back away from the first bottom plate 1000 to form the convex portion 131. The first transition subpart 132 and the second transition subpart 133 are spaced apart to form the communicating flow channel 13A.

In this solution, the first transition subpart 132 is provided at bends of the first bottom plate 1000 and the first side plate 1001 and a second transition subpart 133 is provided at bends of the second bottom plate 1010 and the second side plate 1011, so as to form a bulge-like transition part 13. In this way, the communicating flow channel 13A is effectively formed and the heat exchange medium effectively flows between the first flow channel 110 and the second flow channel 120.

According to some embodiments of this application, as shown in FIG. 6, the first transition subpart 132 includes a first connecting segment 1320 and a second connecting segment 1321, one end of the second connecting segment 1321 is connected to the first side plate 1001 through the first connecting segment 1320, and another end of the second connecting segment 1321 is connected to the first bottom plate 1000, where the first connecting segment 1320 is a first arc transition segment, an inner radius of the first connecting segment 1320 is R, and R ≥ 8 mm is satisfied.

The first connecting segment 1320 is in an arc shape, with one end connected to the first side plate 1001 and another end connected to the second connecting segment 1321, so that the second connecting segment 1321 and the first side plate 1001 have an arc transition. The second connecting segment 1321 is depressed from the first bottom plate 1000 towards the second bottom plate 1010, and one end of the second connecting segment 1321 far away from the first connecting segment 1320 is connected to the first bottom plate 1000.

The inner radius R of the first connecting segment 1320 may be 8 mm, 9 mm, or 10 mm.

In this solution, the first transition subpart 132 can be formed using the stamping process. The inner radius R of the first connecting segment 1320 affects the height h1 of the communicating flow channel 13A. When the inner radius R is larger, the height h1 of the communicating flow channel 13Ais greater. According to tests, when the inner radius R is greater than or equal to 8 mm, the height h1 of the communicating flow channel 13A can be greater than or equal to 1.0 mm, thereby satisfying the flow resistance requirement and enabling the heat exchange medium to effectively flow between the first flow channel 110 and the second flow channel 120.

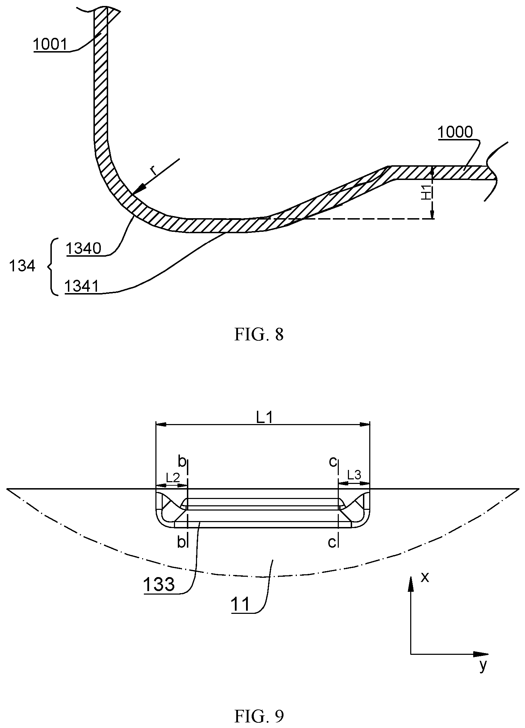

According to some embodiments of this application, referring to FIG. 8, FIG. 8 is a partial schematic diagram of a first base plate 100 according to some embodiments of this application. The first bottom plate 1000 and the first side plate 1001 are connected through a third transition subpart 134 at a position without the first transition subpart 132, the third transition subpart 134 includes a third connecting segment 1340 and a fourth connecting segment 1341, one end of the fourth connecting segment 1341 is connected to the first side plate 1001 through the third connecting segment 1340, and another end of the fourth connecting segment 1341 is connected to the first bottom plate 1000, where the third connecting segment 1340 is a second arc transition segment and an inner radius of the second arc transition segment is r; where the third transition subpart 134 protrudes from the first bottom plate 1000 in a direction approaching the second bottom plate 1010, the third transition subpart 134 protrudes from the first bottom plate 1000 by a depth of H1, and r < H1 is satisfied.

The third connecting segment 1340 is an arc segment, with one end connected to the first side plate 1001 and another end connected to the fourth connecting segment 1341. The third connecting segment 1340 serves as an arc transition between the fourth connecting segment 1341 and the first side plate 1001, and the inner radius of the second arc transition segment is r. The fourth connecting segment 1341 protrudes from the first bottom plate 1000 towards the second bottom plate 1010, and one end of the fourth connecting segment 1341 far away from the third connecting segment 1340 is connected to the first bottom plate 1000.

The third transition subpart 134 protrudes from the first bottom plate 1000 by a depth of H1, where r < H1 is satisfied. This may mean that the entire third connecting segment 1340 sinks by a distance of H1, so that the third connecting segment 1340 is below the first bottom plate 1000 and the battery cell on the first bottom plate 1000 does not interfere with the third connecting segment 1340.

In this solution, the first side plate 1001 is bent on the first bottom plate 1000 by using the stamping or bending process, the first bottom plate 1000 and the first side plate 1001 are connected through the third transition subpart 134 at a position without the first transition subpart 132, and the third connecting segment 1340 of the third transition subpart 134 is in the shape of an arc with the inner radius of r. The third transition subpart 134 is set to protrude in a direction approaching the second bottom plate 1010, the protruding depth H1 corresponds to the sinking depth of the third connecting segment 1340, and H1 is greater than r. This prevents battery cell assembly from being intervened at the bends between the first bottom plate 1000 and the first side plate 1001, ensuring smooth assembly of the battery cell.

In some other embodiments, the first bottom plate 1000 and the first side plate 1001 may have a right-angled transition at the position without the first transition subpart 132.

According to some embodiments of this application, r = 3 mm and 3 mm < H1 ≤ 10 mm are satisfied.

In some embodiments, due to the manufacturing process, the inner radius of the third connecting segment 1340 is 3 mm. Therefore, the protruding depth H1 of the third transition subpart 134 based on the first bottom plate 1000 may be 3.1 mm, 3.2 mm, 3.3 mm, ..., 5 mm, 5.1 mm, ..., 9.9 mm, or 10 mm.

In this solution, in some embodiments, the inner radius r of the third connecting segment 1340 is 3 mm. When H1 is less than or equal to 3 mm, it means that the sinking depth of the third connecting segment 1340 is less than or equal to 3 mm. In this case, the highest position of the third connecting segment 1340 is level with the first bottom plate 1000. During battery cell assembly, the side wall 12 of the battery cell is in contact with the first side plate 1001, failing to satisfy the assembly requirement that a clearance is needed between the battery cell of the battery and the first side plate 1001. When H1 is greater than 10 mm, the height of the thermal management component 10 is excessively great, reducing space in the height direction of the battery and affecting the volumetric energy density of the battery. Therefore, H1 is restricted as 3 mm < H1 ≤ 10 mm in this application. This not only leaves a clearance between the battery cell and the first side plate 1001 for satisfying the assembly requirements but also avoids an excessive height for the thermal management component 10 and increases the volumetric energy density of the battery.

According to some embodiments of this application, referring to FIG. 9, FIG. 9 is a schematic diagram of a second transition subpart 133 according to some embodiments of this application. Along a second direction y, a size of the second transition subpart 133 is L1 and L1 ≥ 70 mm is satisfied The first direction x, the second direction y, and the thickness direction z of the bottom wall are perpendicular to each other.

The second direction y is perpendicular to the first direction x and the thickness direction z of the bottom wall. In some embodiments, the second direction y may be a length direction of the bottom wall 11. The size L1 of the second transition subpart 133 along the second direction y may refer to the size of a part of the second transition subpart 133 protruding from the second bottom plate 1010 along the second direction y. In some embodiments, a value of L1 may be 70 mm, 71 mm, 72 mm, 73mm, or the like.

In this solution, the transition part 13 can be made using the hot rolling process. In the second direction y, the second transition subpart 133 can be sequentially divided into a first rolling segment, a fluid segment, and a second rolling segment which are connected with each other. The first rolling segment and the second rolling segment are respectively used to connect the fluid segment to the bottom wall 11 or side wall 12. The first rolling segment and the second rolling segment have inclined planes for smooth transition to the bottom wall 11 or side wall 12. The fluid segment is part of the communicating flow channel for effectively circulating the heat exchange medium. A size of the fluid segment should be greater than or equal to 20 mm in the second direction y. If the size is less than 20 mm, problems of high molding risk and poor manufacturability are caused. Limited by the hot rolling process and considering a deviation in the rolling direction, sizes of the first rolling segment and the second rolling segment should be greater than or equal to 25 mm in the second direction y. In the second direction y, the size L1 of the second transition subpart 133 is the sum of the first rolling segment, the fluid segment, and the second rolling segment, and the size L1 should be greater than or equal to 25 mm + 20 mm + 25 mm, namely, L1 ≥ 70 mm, so as to improve the manufacturability of the transition part 13. With reference to FIG. 9, the first rolling segment, the fluid segment, and the second rolling segment are distinguished using dashed lines b-b and c-c. In the second direction y, the size of the first rolling segment is L2 and the second rolling segment is L3. Limited by the hot rolling process, the printing pipeline has a deviation of about 10/1000 mm in the rolling direction. If the printing pipeline is 10/1000 mm shorter than expected, the boundary between the fluid segment and the first rolling segment (for example, the dashed line b-b) moves left to the inclined plane of the first rolling segment or even to the outside of the first rolling segment. This affects the molding of the fluid segment, thereby affecting the manufacturability. According to the design experience, L2 ≥ 25 mm. Similarly, if the printing pipeline is 10/1000 mm longer than expected, the boundary between the fluid segment and the second rolling segment (for example, the dashed line c-c) moves right to the inclined plane of the second rolling segment or even to the outside of the second rolling segment, affecting the manufacturability. According to design experience, L3 ≥ 25 mm.

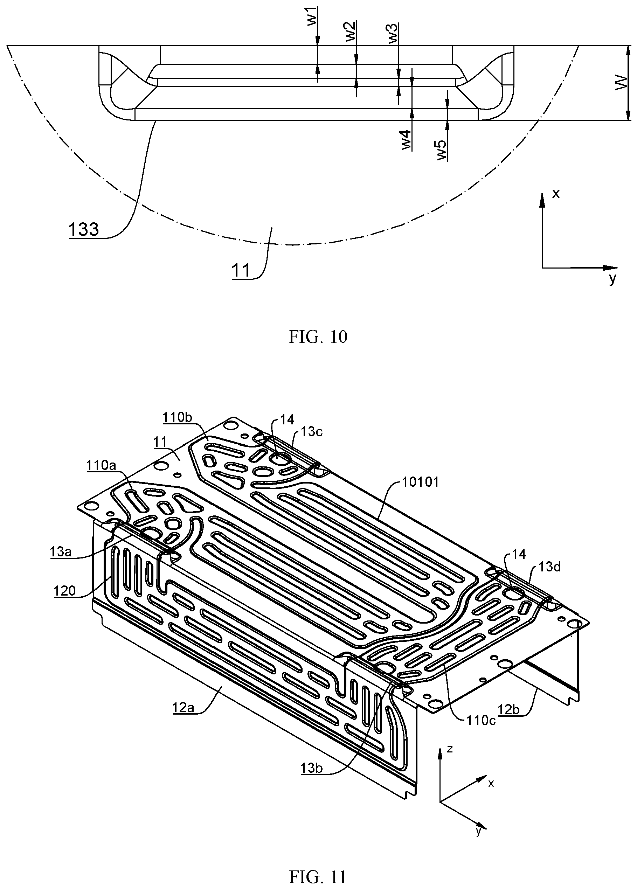

According to some embodiments of this application, as shown in FIG. 10, FIG. 10 is a schematic diagram of a second transition subpart 133 according to some embodiments of this application. Along the first direction x, a size of the second transition subpart 133 is W and W ≥ 22 mm is satisfied.

In some embodiments, the first direction x may be the length direction of the bottom wall 11. The size W of the second transition subpart 133 along the first direction x may refer to the size of a part of the second transition subpart 133 protruding from the second bottom plate 1010 along the first direction x. In some embodiments, a value of W may be 22 m, 23 mm, 24 mm, or the like.

In order that the second transition subpart 133 can be effectively formed on the second base plate 101 and protrude from the second bottom plate 1010, the second transition subpart 133 may include a rounded corner at the bend on the border of the side wall 12, a planar area, a transition area between the plane and an inclined plane, the inclined plane, and a transition area between the inclined plane and the bottom wall 11. In the first direction x, the size W of the second transition subpart 133 is the sum of a size w1 of the rounded corner at the bend, a size w2 of the planar area, a size w3 of the transition area between the plane and inclined plane, a size of the inclined plane w4, and a size w5 of the transition area between the inclined plane and bottom surface. Considering manufacturability from the process perspective, to avoid creasing, cracking, or collapse of the second base plate 101, w1 ≥ 8 mm, w2 ≥ 2 mm, w3 ≥ 2 mm, w4 ≥ 8 mm, and w5 ≥ 2 mm.

In this solution, in the first direction x, to improve the molding feasibility (for example, feasibility of stamping) of the second transition subpart 133, the second transition subpart 133 may include a rounded corner at the bend on the border of the side wall 12, a planar area, a transition area between the plane and an inclined plane, the inclined plane, and a transition area between the inclined plane and the bottom wall 11. Therefore, the size W of the second transition subpart 133 is the sum of a size of the rounded corner at the bend, a size of the planar area, a size of the transition area between the plane and inclined plane, a size of the inclined plane, and a size of the transition area between the inclined plane and bottom surface. These sizes are affected by the manufacturability of parts. To improve the manufacturability, these sizes should be greater than or equal to 8 mm, 2 mm, 2 mm, 8 mm, and 2 mm respectively. As a result, W ≥ 22 mm.

According to some embodiments of this application, as shown in FIG. 7, a height of the first flow channel 110 is h2, and 1.0 mm ≤ h2 ≤ 4.0 mm is satisfied.

In some embodiments, the height of the first flow channel 110 may refer to a size of the first flow channel 110 in a direction perpendicular to the flow direction of the heat exchange medium. In some embodiments, the height h2 of the first flow channel 110 may be the distance between the first bottom plate 1000 and the second bottom plate 1010 at the position of the first flow channel 110. A value of h2 may be 1.0 mm, 1.1 mm, 1.2 mm, ..., 2.8 mm, 2.9 mm, ..., 3.8mm, 3.9 mm, or 4.0 mm.

In this solution, an excessively small height for the first flow channel 110 may cause an excessively great flow resistance, affecting the thermal management effects of the thermal management component 10 on the battery cell. An excessively great height for the second flow channel 120 may reduce the volumetric energy density of the battery and increase the molding difficulty. Therefore, in some embodiments of this application, the first flow channel 110 is restricted as 1.0 mm ≤ h2 ≤ 4.0 mm. This not only improves the fluidity of the heat exchange medium and the thermal management effects on the battery cell, but also increases the volumetric energy density of the battery.

In some embodiments, the value of h2 may be 2 mm-3.5 mm.

According to some embodiments of this application, as shown in FIG. 11, FIG. 11 is a schematic diagram of a thermal management component 10 according to some embodiments of this application. FIG. 11 mainly shows the outer surface of the bottom wall 11 and the outer surface of one side wall 12. A reinforcing part 14 is provided on an outer side of the thermal management component 10, and the reinforcing part 14 connects the transition part 13 and the bottom wall 11.

The reinforcing part 14 is a part provided on the outer side of the bottom wall 11 and serves to increase the rigidity of the transition part 13.

In this solution, the reinforcing part 14 is provided to increase the rigidity of the transition part 13 and reduce the cracking risk of the transition part 13.

According to some embodiments of this application, the reinforcing part 14 is a welded part.

In some embodiments, the reinforcing part 14 may be a welding joint, namely, a welded part, provided between the bottom wall 11 and the transition part 13.

In this solution, the welded part is provided to restrain the transition part 13, so as to increase the rigidity of the transition part 13 and reduce the cracking risk of the transition part 13.

According to some embodiments of this application, as shown in FIG. 3 and FIG. 5, the bottom wall 11 is provided with a first access pipe 15 and a second access pipe 16, and the first access pipe 15 and the second access pipe 16 communicate with the first flow channel 110.

The first access pipe 15 and the second access pipe 16 are components communicating with the first flow channel 110 and are used for inflow and outflow of the heat exchange medium, so as to circulate the heat exchange medium. In some embodiments, the heat exchange medium is water, and the first access pipes 15 and the second access pipes 16 can be both connected to a water tank through pipelines, thereby circulating water in the thermal management component 10.

**In** this solution, the first access pipe 15 and the second access pipe 16 are provided to allow the heat exchange medium to flow into and out of the thermal management component 10, so as to circulate the heat exchange medium.

In some embodiments, water inlet and water outlet are not distinguished between the first access pipe 15 and the second access pipe 16. The first access pipe 15 may be used as a water inlet or a water outlet, and the second access pipe 16 may be used as a water outlet or a water inlet.

With reference to FIG. 11, FIG. 11 shows the positions of a first flow sub-channel 110a, a second flow sub-channel 110b, a third flow sub-channel 110c, a first transition part 13a, a second transition part 13b, a third transition part 13c, a second flow sub-channel 110b, a first side wall 12a, and a second side wall 12b.

According to some embodiments of this application, the first flow channel 110 includes a first flow sub-channel 110a, a second flow sub-channel 110b, and a third flow sub-channel 110c, where the first flow sub-channel 110a and the second flow sub-channel 110b are arranged side by side, the first access pipe 15 communicates with one end of the first flow sub-channel 110a, the second access pipe 16 communicates with one end of the second flow sub-channel 110b, and another end of the first flow sub-channel 110a and another end of the second flow sub-channel 110b communicate through the third flow sub-channel 110c. The two side walls 12 are a first side wall 12a and a second side wall 12b. Four transition parts 13 are provided: a first transition part 13a and a second transition part 13b provided at bends of the first side wall 12a and the bottom wall 11, and a third transition part 13c and a fourth transition part 13d provided at bends of the second side wall 12b and the bottom wall 11. One end of the second flow channel 120 in the first side wall 12a communicates with the first flow sub-channel 110a through the first transition part 13a, and another end communicates with the third flow sub-channel 110c through the second transition part 13b. One end of the second flow channel 120 in the second side wall 12b communicates with the second flow sub-channel 110b through the third transition part 13c, and another end communicates with the third flow sub-channel 110c through the fourth transition part 13d.

In some embodiments, the heat exchange medium enters the first access pipe 15, and the heat exchange medium may pass through the first flow sub-channel 110a, the second flow channel 120 in the first side wall 12a through the first transition part 13a, the third flow sub-channel 110c through the second transition part 13b, the second flow channel 120 in the second side wall 12b through the fourth transition part 13d, the second flow sub-channel 110b through the third transition part 13c, and finally is discharged through the second access pipe 16. Another end of the first flow sub-channel 110a and another end of the second flow sub-channel 110b communicate through the third flow sub-channel 110c. Therefore, part of the heat exchange medium in the first flow sub-channel 110a can also enter the second flow sub-channel 110b through the third flow sub-channel 110c. Depending on design of flow resistance between the first flow sub-channel 110a and the third flow sub-channel 110c and between the second flow sub-channel 110b and the third flow sub-channel 110c, the flow rate of the heat exchange medium flowing from the first flow sub-channel 110a to the third flow sub-channel 110c and the second flow channel 120 in the first side wall 12a can be adjusted.

In some other embodiments, another end of the first flow sub-channel 110a and another end of the second flow sub-channel 110b may communicate directly rather than through the third flow sub-channel 110c.

In this solution, the first flow sub-channel 110a, the second flow sub-channel 110b, the third flow sub-channel 110c, and the four transition parts 13 are provided, so that the heat exchange medium enters the first flow channel 110 through the first access pipe 15 or the second access pipe 16, passes through two second flow channels 120, and then enters the second access pipe 16 or the first access pipe 15. This improves the heat exchange efficiency on the battery cell and the reliability of the battery.

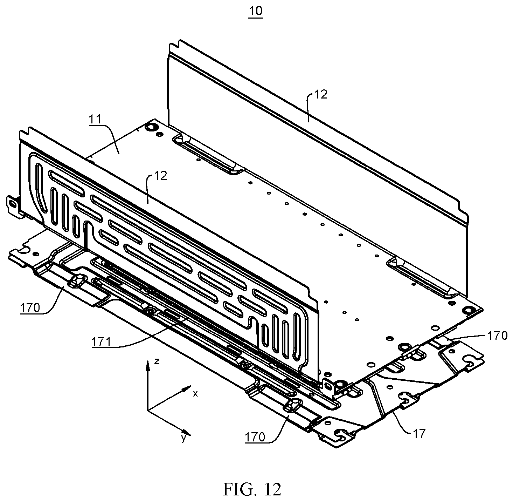

According to some embodiments of this application, referring to FIG. 12, FIG. 12 is a stereogram of a thermal management component 10 according to some other embodiments of this application.

The thermal management component 10 further includes a bottom support plate 17, and the bottom support plate 17 is connected to a surface of the second bottom plate 1010 back away from the first bottom plate 1000.

The bottom support plate 17 is provided on an outer side the bottom wall 11 and can support the bottom wall 11. In some embodiments, the bottom support plate 17 has high strength and rigidity. In some embodiments, the bottom support plate 17 may be made of aluminum, aluminum alloy, steel, stainless steel, or the like.

In this solution, the bottom support plate 17 is provided to increase the overall strength and rigidity of the thermal management component 10, thereby improving the reliability of the thermal management component 10.

According to some embodiments of this application, a third groove 170 is formed on a surface of the bottom support plate 17 facing the second bottom plate 1010, and the third groove 170 accommodates the transition part 13.

The third groove 170 matches the protruding transition part 13, so that the bottom tray can be attached to the outer surface of the second bottom plate 1010.

In this solution, the third groove 170 is provided to accommodate the transition part 13, so as to protect the transition part 13 from being cracked under external force.

According to some embodiments of this application, a protrusion 10101 corresponding to a position of the first groove 10100 is provided on a surface of the second bottom plate 1010 back away from the first bottom plate 1000. A fourth groove 171 is formed on a surface of the bottom support plate 17 facing the second bottom plate 1010, and the fourth groove 171 accommodates the protrusion 10101.

In some embodiments, the first groove 10100 may be formed on a surface of the second bottom plate 1010 facing the first bottom plate 1000 by using the inflation or stamping process, so that the surface of the second bottom plate 1010 back away from the first bottom wall 11 protrudes outward to form the protrusion 10101. The fourth groove 171 is a concave part formed on the bottom support plate 17 and matching the protrusion 10101, to accommodate the protrusion 10101, so that the bottom tray can reliably support the second bottom plate 1010.

In this solution, the fourth groove 171 is provided to accommodate the protrusion 10101 formed on the outer surface of the second bottom plate 1010, so as to protect the first flow channel 110 and allow the thermal management component 10 to have a flat bottom surface.

According to some embodiments of this application, this application provides a battery including a battery cell and the thermal management component 10 described above, where the battery cell is provided in the accommodating cavity.

According to some embodiments of this application, the thermal management component 10 is a box for the battery.

In some embodiments, the thermal management component 10 may be used as a box for the battery, and the battery cell is provided in the accommodating cavity and protected by the box. In other embodiments, the battery may further include a cover. The cover cooperates with the bottom wall 11 and the side wall 12 of the thermal management component 10 to form a closed cavity together with the thermal management component 10. The battery cell is located in the closed cavity.

According to some embodiments of this application, this application further provides an electric device including the foregoing battery configured to provide electric energy.

According to some embodiments of this application, referring to FIG. 3 to FIG. 12, this application further provides a thermal management component 10. The thermal management component 10 can be used as a box for the battery and implements three-sided cooling. The thermal management component 10 includes a bottom support plate 17, a bottom wall 11, and two side walls 12. The two side walls 12 are arranged opposite each other on two sides of the bottom wall 11 along a width direction of the bottom wall 11, and a battery cell can be provided on the bottom wall 11 between the two side walls 12. The bottom support plate 17 is provided below the bottom wall 11 and welded to the bottom wall 11, so as to enhance the overall strength and rigidity of the thermal management component 10 and serve as a battery bearing part.

A first flow channel 110 is formed inside the bottom wall 11, and a second flow channel 120 is formed inside both side walls 12. A stamped convex structure, namely, a transition part 13, is provided at bends of the bottom wall 11 and the side walls 12, and a communicating flow channel 13A is formed inside the transition part 13 to communicate the first flow channel 110 and the second flow channel 120. In addition, the transition part 13 is structurally reinforced by welding joints. A first access pipe 15 and a second access pipe 16 are provided on an inner side of the bottom wall 11, and the first access pipe 15 and the second access pipe 16 communicate with the first flow channel 110. The first flow channel 110 and the second flow channel 120 can be set to be symmetrical, so that cooling water can reach any positions of the first flow channel 110 and the second flow channel 120, and water inlet and water outlet are not distinguished between the first access pipe 15 and the second access pipe 16, avoiding incorrect installation. Cooling water can enter the first flow channel 110 through the first access pipe 15 or the second access pipe 16, then the second flow channels 120 of the two side walls 12 through the communicating flow channel 13A, and finally is discharged through the second access pipe 16 or the first access pipe 15.

To improve manufacturability, the stamped structure is subject to restrictions. As for the stamped convex structure, namely, the transition part 13, L1 ≥ 70 mm is satisfied regarding its size L1 in a length direction of the bottom wall 11 and W ≥ 22 mm is satisfied regarding its size W in a width direction of the bottom wall 11.

To improve the manufacturability, based on many tests, 1.0 mm ≤ h1 ≤ 3.0 mm is satisfied regarding a height h1 of the communicating flow channel 13A. See Table 1 for test data.

**Table 1**

| Test case | Condition setting | Test result | |
|---|---|---|---|
| | h1 (mm) | Mold cracked or not | Deviation of flow resistance relative to target value |
| 1 | 0.5 | No | (+30%)-(+50%) |
| 2 | 1.0 | No | ±5% |
| 3 | 2.0 | No | (-10%)-(-20%) |
| 4 | 3.0 | No | (-30%)-(-40%) |
| 5 | 3.5 | Yes | / |

As can be learned from Table 1, if h1 < 1.0 mm, the flow of water at the bends is affected and the flow resistance is excessively large, therefore affecting the thermal management performance of the thermal management component 10; if H1 > 3.0 mm, the deformation of plates at the bends is excessively great and exceeds the stress intensity limit of the material, resulting in mold cracking during inflation. According to the design experience, 1.0 mm ≤ h1 ≤ 3.0 mm is recommended.

To improve manufacturability, based on many tests, R ≥ 8 mm is satisfied regarding the inner radius R of the transition part 13. See Table 2 for test data.

**Table 2**

| Test case | Condition setting | Test result | |
|---|---|---|---|
| | Inner radius R of stamped convex structure-transition part (mm) | Height h1 of flow channel at bends | Conclusion |
| 1 | 6 | 0-0.5 mm | Failed |
| 2 | 7 | 0.2-0.8 mm | Failed |
| 3 | 8 | 1.0-2.0 mm | Pass |
| 4 | 9 | 1.5-2.5 mm | Pass |
| 5 | 10 | 1.8-2.8 mm | Pass |

As can be learned from Table 2, if R < 8 mm, the height h1 of the flow channel at the bends is less than 1.0 mm. This affects the flow of water at the bends and the flow resistance is excessively large, thereby affecting the thermal management performance of the thermal management component 10.

The foregoing descriptions are merely preferred embodiments of this application, but are not intended to limit this application. Persons skilled in the art understand that this application may have various modifications and variations. Any modification, equivalent replacement, and improvement made without departing from the spirit and principle of this application shall fall within the protection scope of this application.

## Claims

1. A thermal management component, comprising a bottom wall and two side walls, wherein the two side walls are arranged opposite each other on two sides of the bottom wall along a first direction, and the bottom wall and the two side walls jointly enclose an accommodating cavity for accommodating a battery cell; and a first flow channel is formed inside the bottom wall, a second flow channel is formed inside each of the two side walls, and the first flow channel and the second flow channels are configured to accommodate a heat exchange medium for adjusting a temperature of the battery cell;
wherein a transition part is provided at a bend between the bottom wall and each of the two side walls, a communicating flow channel is formed inside the transition part, and the communicating flow channel communicates the first flow channel and the second flow channel.

2. The thermal management component according to claim 1, wherein
the transition part forms a concave portion on an inner side of the thermal management component, and the transition part forms a convex portion on an outer side of the thermal management component.

3. The thermal management component according to claim 1 or 2, wherein a height of the communicating flow channel is h1 and 1.0 mm ≤ h1 ≤ 3.0 mm is satisfied.

4. The thermal management component according to claim 2 or 3, wherein
the thermal management component comprises a first base plate and a second base plate, wherein the first base plate comprises a first bottom plate and two first side plates, and the two first side plates are arranged opposite each other on two sides of the first bottom plate; and the second base plate comprises a second bottom plate and two second side plates, and the two second side plates are arranged opposite each other on two sides of the second bottom plate; wherein
the first bottom plate and the second bottom plate are stacked to form the bottom wall, and the first flow channel is formed between the first bottom plate and the second bottom plate; and
the first side plate and the second side plate are stacked to form the side wall, and the second flow channel is formed between the first side plate and the second side plate.

5. The thermal management component according to claim 4, wherein
a first groove is formed on a surface of the second bottom plate facing the first bottom plate, and the first bottom plate covers the first groove to form the first flow channel; and
a second groove is formed on a surface of the second side plate facing the first side plate, and the first side plate covers the second groove to form the second flow channel.

6. The thermal management component according to claim 4 or 5, wherein
a thickness of the first base plate is M1, a thickness of the second base plate is M2, and M1 + M2 ≤ 3 mm is satisfied.

7. The thermal management component according to claim 5 or 6, wherein
a thickness of the first base plate is M1, a thickness of the second base plate is M2, and 0.3 ≤ M2/(M1 + M2) ≤ 0.5 is satisfied.

8. The thermal management component according to any one of claims 5 to 7, wherein
the second base plate is provided on a side of the first base plate away from the accommodating cavity.

9. The thermal management component according to claim 8, wherein
the transition part comprises a first transition subpart provided at a bend between the first bottom plate and the first side plate and a second transition subpart provided at a bend between the second bottom plate and the second side plate, and the communicating flow channel is formed between the first transition subpart and the second transition subpart; wherein
the first transition subpart forms the concave portion on the inner side of the thermal management component, and the second transition subpart forms the convex portion on the outer side of the thermal management component.

10. The thermal management component according to claim 9, wherein
the first transition subpart comprises a first connecting segment and a second connecting segment, one end of the second connecting segment is connected to the first side plate through the first connecting segment, and another end of the second connecting segment is connected to the first bottom plate, wherein the first connecting segment is a first arc transition segment, an inner radius of the first connecting segment is R, and R ≥ 8 mm is satisfied.

11. The thermal management component according to claim 9 or 10, wherein
the first bottom plate and the first side plate are connected through a third transition subpart at a position without the first transition subpart, the third transition subpart comprises a third connecting segment and a fourth connecting segment, one end of the fourth connecting segment is connected to the first side plate through the third connecting segment, and another end of the fourth connecting segment is connected to the first bottom plate, wherein the third connecting segment is a second arc transition segment and an inner radius of the second arc transition segment is r,
the third transition subpart protrudes from the first bottom plate in a direction approaching the second bottom plate, the third transition subpart protrudes from the first bottom plate by a depth of H1, and r < H1 is satisfied.

12. The thermal management component according to claim 11, wherein
r = 3 mm and 3 mm < H1 ≤ 10 mm are satisfied.

13. The thermal management component according to any one of claims 9 to 12, wherein
along a second direction, a size of the second transition subpart is L1 and L1 ≥ 70 mm is satisfied; and the first direction, the second direction, and a thickness direction of the bottom wall are perpendicular to each other.

14. The thermal management component according to any one of claims 9 to 13, wherein
along the first direction, a size of the second transition subpart is W and W ≥ 22 mm is satisfied.

15. The thermal management component according to any one of claims 1 to 14, wherein
a height of the first flow channel is h2, and 1.0 mm ≤ h2 ≤ 4.0 mm is satisfied.

16. The thermal management component according to any one of claims 1 to 15, wherein
a reinforcing part is provided on an outer side of the thermal management component, and the reinforcing part connects the transition part and the bottom wall.

17. The thermal management component according to claim 16, wherein
the reinforcing part is a welded part.

18. The thermal management component according to any one of claims 1 to 17, wherein
the bottom wall is provided with a first access pipe and a second access pipe, and the first access pipe and the second access pipe communicate with the first flow channel.

19. The thermal management component according to claim 18, wherein
the first flow channel comprises a first flow sub-channel, a second flow sub-channel, and a third flow sub-channel, wherein the first flow sub-channel and the second flow sub-channel are arranged side by side, the first access pipe communicates with one end of the first flow sub-channel, the second access pipe communicates with one end of the second flow sub-channel, and another end of the first flow sub-channel and another end of the second flow sub-channel communicate through the third flow sub-channel; and
the two side walls are a first side wall and a second side wall; four transition parts are provided: a first transition part and a second transition part provided at bends between the first side wall and the bottom wall, and a third transition part and a fourth transition part provided at bends between the second side wall and the bottom wall; one end of the second flow channel in the first side wall communicates with the first flow sub-channel through the first transition part, and another end communicates with the third flow sub-channel through the second transition part; and one end of the second flow channel in the second side wall communicates with the second flow sub-channel through the third transition part, and another end communicates with the third flow sub-channel through the fourth transition part.

20. The thermal management component according to any one of claims 8 to 19, wherein the thermal management component further comprises a bottom support plate, and the bottom support plate is connected to a surface of the second bottom plate away from the first bottom plate.

21. The thermal management component according to claim 20, wherein
a third groove is formed on a surface of the bottom support plate facing the second bottom plate, and the third groove accommodates the transition part.

22. The thermal management component according to claim 20 or 21, wherein
a protrusion corresponding to a position of the first groove is provided on a surface of the second bottom plate away from the first bottom plate; and
a fourth groove is formed on the surface of the bottom support plate facing the second bottom plate, and the fourth groove accommodates the protrusion.

23. A battery, comprising:
a battery cell; and
the thermal management component according to any one of claims 1 to 22, wherein the battery cell is provided in the accommodating cavity.

24. The battery according to claim 23, wherein
the thermal management component is a box for the battery.

25. An electric device, comprising the battery according to claim 23 or 24 and configured to provide electric energy.
